# FASCICULE DE BREVET EUROPEEN

(11) **EP 0 815 529 B1**
(45) Date de publication et mention de la délivrance du brevet: **23.06.1999**
(21) Numéro de dépôt: 96908168.6
(22) Date de dépôt: 21.03.1996
(51) Int. Cl.: G06K 7/06

(54) **CONNECTEUR POUR APPAREIL LECTEUR DE CARTE A MICROCIRCUIT**
VERBINDER FÜR IC-KARTENLESER
CONNECTOR FOR A SMART CARD READER APPARATUS

(30) Priorité: 22.03.1995 FR 9503346
(43) Date de publication de la demande: 07.01.1998
(73) Titulaire: FRAMATOME CONNECTORS INTERNATIONAL, 92400 Courbevoie (FR)
(72) Inventeur: VALLAT, Bernard, F-34970 Lattes (FR)
(74) Mandataire: Keib, Gérard
(86) Numéro de dépôt international: FR9600428
(87) Numéro de publication internationale: WO9629672

(56) Documents cités:
- EP-A- 0 316 699
- EP-A- 0 363 871
- EP-A- 0 595 305

## Description

L'invention concerne un connecteur pour appareil lecteur de carte à microcircuit.

Dans le cadre de l'invention, on entend par "carte" toutes sortes de cartes du type incorporant un circuit intégré monolithique ou hybride, dit "puce". Ce terme "microcircuit" sera utilisé dans ce qui suit. Il s'agit, par exemple, de carte du format "carte de crédit", connue encore sous la dénomination "CAM" (Carte A Mémoire"). Le plus souvent, le microcircuit est réalisé à base d'un microprocesseur ou d'un microcontrôleur, comprenant, notamment des circuits de mémoire, par exemple de type "PROM". Ce type de carte doit pouvoir être inséré dans des dispositifs spécifiques de lecture et/écriture de données. Pour simplifier ce dispositif sera appelé "lecteur" dans ce qui suit, étant bien entendu qu'il peut également assurer l'écriture de données et d'autres fonctions annexes (alimentation en énergie électrique, tests) qui seront rappelées ci-après. Les données sont stockées dans les circuits mémoires précités, généralement sous forme cryptée. Elles sont donc lues à partir de positions mémoires ou au contraires écrites dans ces positions mémoires.

D'autres architectures logiques sont mise en oeuvre, notamment pour des applications type "porte-monnaie électronique" ou similaire.

Dans tous les cas, il existe des organes d'entrée-sortie constitués par des plages de contact, encore appelés "pads", affleurant en surface d'une des faces principales de la carte. Diverses normes définissent la position de ces plages de contact (ISO, AFNOR, etc.). Ils servent, non seulement pour les entrées-sorties de données précitées, mais aussi pour l'alimentation en énergie électrique du microcircuit ainsi que pour effectuer diverses vérifications, selon les applications considérées (test de présence, etc.). Le lecteur comporte des contacts balais qui viennent en contact galvanique avec les plages précitées, lorsque la carte est correctement insérée dans un connecteur prévu à cet effet.

Divers besoins et tendances émergent actuellement, et parmi ceux-ci, les suivants :
- nécessité d'améliorer la sécurité de fonctionnement des appareils lecteurs de carte ;
- tendance à la miniaturisation, donc à la diminution de l'épaisseur des lecteurs de carte ;
- et multiplication des applications de la carte à microcircuit, ainsi qu'une baisse rapide des prix des connecteurs, en fonction directe de la croissance du marché correspondant.

En conséquence, un certain nombre de problèmes doivent être résolus simultanément, dont les suivants :
1. La mise sous tension du microcircuit de la carte ne doit s'effectuer que si les contacts balais sont correctement positionnés sur les plages de contact de la carte. Une mise sous tension, en position incorrecte, non seulement ne permet pas le fonctionnement du système lecteur, mais peut éventuellement endommager les circuits électroniques constituant du microcircuit.
2. En particulier, il est nécessaire que les balais relatifs aux signaux de données soient en position avant que la tension d'alimentation soit envoyée sur le microcircuit.
3. L'utilisateur peut retirer la carte en cours de traitement (cas dit "d'arrachement"). Il est alors nécessaire que le lecteur réagisse très rapidement pour couper l'alimentation électrique avant que les balais n'atteignent des positions interdites (c'est-à-dire dangereuse pour l'intégrité des circuits du microcircuit).
4. L'utilisation, quelle qu'en soit la cause, accident ou tentative de fraude, d'un objet non conforme, par exemple d'une plaque électriquement conductrice ou d'une carte truquée, peut également provoquer des défauts.

Dans tous ces cas, il est nécessaire de bloquer le fonctionnement du lecteur et couper l'alimentation en énergie électrique pour limiter les risques de détérioration des circuits et/ou tentatives de fraude.

Il existe de nombreux système de lecteur visant à résoudre tout ou partie de ces problèmes. Il est possible de les classer en trois grandes catégories.

La première catégorie est constituée par des systèmes de détection électronique.

Dans ce type de systèmes, avant d'envoyer une tension électrique au microcircuit, on procède à un test électrique, par exemple la mesure de la résistance entre les contacts balais. Si ces tests ne correspondent pas à des valeurs prévues, dans une gamme donnée, il en est déduit que la carte est mal insérée ou qu'un objet étranger est introduit à sa place.

Ce type de système comporte plusieurs inconvénients et parmi lesquels, les suivants :
- Le système devrait fonctionner pour tous les types de microcircuits dont sont équipées les cartes du marché, du moins pour une application donnée (cartes bancaires, etc.). Or la variété de microcircuits est trop importante pour permettre une procédure simple et unique.
- La détection s'effectue juste au passage entre une zone interdite et une zone de fonctionnement. Il est aisé de comprendre, qu'en cas d'arrachement, le système doit réagir très rapidement. L'électronique appropriée à cette fonction est complexe et donc coûteuse.

La deuxième catégorie est constituée par des systèmes dits "à atterrissage". Un exemple d'un tel système est décrit dans la demande de brevet français FR-A-2 628 901.

Conformément à ces systèmes, la carte est positionnée contre une butée avant mise en contact avec les balais. Le contact s'effectue par déplacement relatif de la carte vers les balais, perpendiculairement à la surface de la carte (faces principales).

La sécurité peut n'être assurée que par le bon fonctionnement des organes mécaniques du système. On peut cependant les doubler par un contact type "fin de course" qui bloque la séquence de mise sous tension au cas où la carte ne serait pas en position correcte. Un séquencement de la mise sous tension peut être assurée par la hauteur des balais, ou par une initialisation de l'électronique par fermeture d'un contact "présence carte".

Le principal inconvénient est constitué par le fait que l'agencement mécanique nécessaire pour réaliser les fonctions précitées est complexe et coûteux.

La troisième catégorie est constituée par des systèmes à contact balais frottants avec contact de "fin de course". Un tel système est divulgué, par exemple, par la demande de brevet français FR-A-2 623 314.

Conformément à ces systèmes, les connecteurs dans lesquels sont insérées les cartes sont munis d'un contact de "fin de course" qui déclenche la mise sous tension du microcircuit lorsque la carte est en position correcte.

L'agencement mécanique est simple et peu coûteux.

Cependant ces systèmes ne sont pas exempts d'inconvénients.

On constate souvent un manque de précision dans la position de détection, notamment lorsque les contacts sont horizontaux.

Si les contacts sont verticaux, l'encombrement est plus important, ce qui va à l'encontre d'une des exigences précédemment signalées : miniaturisation.

Deux constations ont été faites par la Demanderesse. Ces constations sont les suivantes :
1. Seuls les éléments de contact du lecteur du type "balais de signaux" doivent impérativement être en position correcte avant mise sous-tension à l'aide des éléments de contacts du type "balais alimentation" et "balais masse";
2. Le système d'alimentation en énergie électrique est toujours prévu pour supporter une mise en court-circuit, ne serait-ce que pour "traiter" les cas d'introduction d'objets non autorisés électriquement conducteurs (plaque de métal, par exemple). Aussi, il n'y a pas de danger lorsque seuls les balais destinés à assurer la liaison avec la tension d'alimentation, ou avec la masse, sont dans une position décalée alors que la tension d'alimentation, est présente.

En tirant partie de ces constatations, l'invention se fixe pour but d'apporter une solution aux problèmes mentionnés ci-dessus, tout en palliant les inconvénients des systèmes de l'Art Connu, dont certains viennent d'être rappelés.

On connaît selon le document EP-A-0 139 593 un appareil lecteur de carte à microcircuit comprenant:
- un connecteur comportant un corps supportant des éléments de contact balais destinés à être mis en contact électrique avec des plages conductrices associées audit microcircuit de la carte lorsque celle-ci est insérée dans le connecteur; et
- un circuit intégré comportant des moyens pour contrôler des opérations d'insertion ou de retrait de la carte dans le lecteur, ledit circuit étant relié, d'une part, avec au moins une partie desdits éléments de contact balais et, d'autre part, avec le circuit électronique du lecteur de carte.

Suivant l'invention, le système de lecture de carte à microcircuit comprenant un connecteur pour appareil lecteur de carte à microcircuit comportant un corps supportant des éléments de contact balais destinés à être mis en contact électrique avec des plages conductrices associées audit microcircuit monté dans la carte lorsque celle-ci est insérée dans le connecteur, l'un desdits éléments de contact balais, porté à un potentiel déterminé étant destiné à alimenter en énergie électrique ledit microcircuit vers une desdites plages conductrices et un autre desdits éléments de contact balais étant porté au potentiel de masse et mis en contact avec au moins une desdites plages conductrices, au moins une partie des éléments de contact balais étant reliée à un circuit électronique comportant des moyens pour contrôler des opérations d'insertion ou de retrait de la carte dans le lecteur, ledit circuit étant relié, d'autre part, avec le circuit électronique du lecteur de carte, ledit connecteur étant caractérisé en ce qu'il comprend et porte ledit circuit électronique et en ce que l'un desdits éléments de contact balais porté à un second potentiel déterminé, est décalé par rapport aux autres éléments de contact balais de manière à ce que, après insertion correcte de la carte dans le connecteur, un des deux événements suivants se réalise lors d'un retrait de la carte du connecteur, avant que les autres éléments de contact balais ne quittent les plages de contact de la carte avec lesquelles ils sont en contact:
- la mise en court-circuit dudit élément de balai porté au potentiel déterminé et dudit élément de balai porté au potentiel de masse,
- ou la variation déterminée dudit second potentiel, d'une amplitude atteignant un seuil déterminé.

Le cadre de lecture conforme à l'invention comporte ainsi en combinaison, un circuit électronique tel que décrit dans la demande de brevet WO-A-96/24 111, ainsi qu'un contact balais supplémentaire, tel que décrit dans l'EP-A-0 595 305.

Selon l'une des versions de l'invention, ce contact balais au lieu d'être supplémentaire, est un élément de contact unique affecté à l'une desdites plages de contact qui est décalé par rapport aux contacts balais affectés aux autres plages de contact.

L'invention sera mieux comprise et d'autres caractéristiques et avantages apparaîtront à la lecture de la description qui suit en référence aux figures annexées, et parmi lesquelles:
- la figure 1 est une vue en perspective d'un connecteur pour lecteur de carte selon l'invention;
- la figure 2 illustre un premier exemple de carte à microcircuit, conforme à la norme ISO, montrant l'emplacement des contacts et leurs principales caractéristiques géométriques;
- la figure 3 illustre un premier exemple de carte à microcircuit, conforme à la norme AFNOR, montrant l'emplacement des contacts et leurs principales caractéristiques géométriques;
- la figure 4 illustre un premier exemple de carte à microcircuit, conforme à la norme ISO, comportant une particularité dans la configuration des contacts;
- Les figures 5a et 5b illustrent un exemple de connecteur destiné à un lecteur de cartes à microcircuit selon l'Art Connu ;
- La figure 6 illustre la disposition des éléments de contact dans un exemple de connecteur selon un premier mode de réalisation de l'invention ;
- Les figures 7a à 7c sont des figures de détail illustrant le fonctionnement d'un connecteur destiné à recevoir des cartes selon la norme ISO ;
- La figure 8 illustre l'électronique spécifique du lecteur de cartes, associée au connecteur selon l'invention ;
- Les figures 9a à 9c sont des figures de détail illustrant le fonctionnement d'un connecteur destiné à recevoir des cartes selon la norme ISO ;

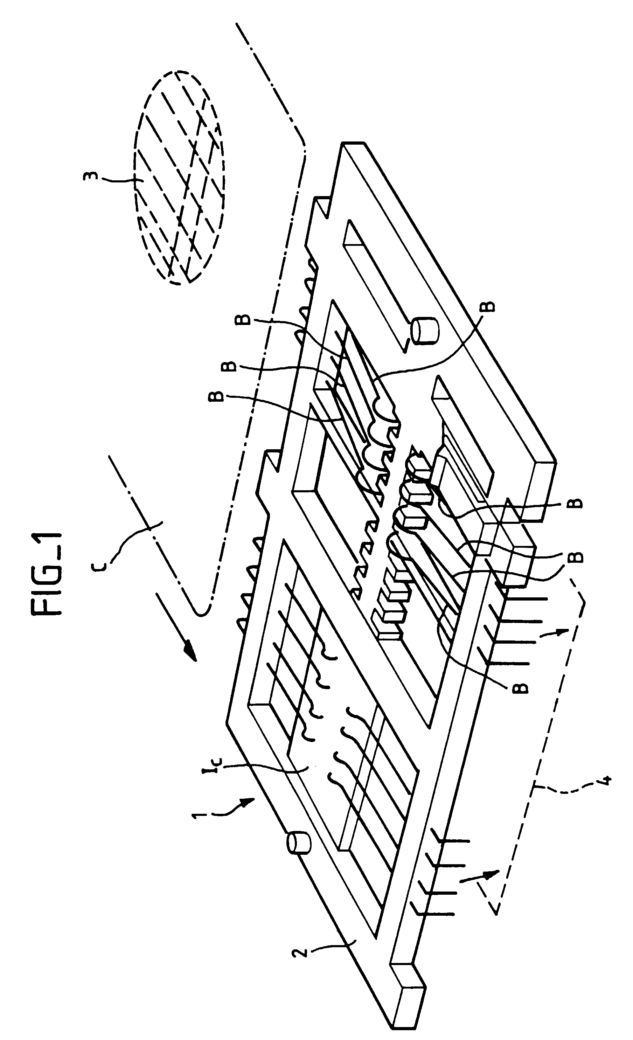

Dans la réalisation de la figure 1, le connecteur 1 pour appareil lecteur de carte C à microcircuit 3 comporte un corps 2 supportant des éléments de contacts balais B, destinées à être mis en contact électrique avec des plages conductrices associées audit microcircuit I_{C} lorsque la carte C est insérée dans le connecteur 1.

Conformément à l'invention, ce connecteur 1 comporte un circuit électronique I_{C} relié, d'une part, avec au moins une partie desdits éléments de contact balais C₁ à C₈ et, d'autre part, avec le circuit électronique 4 du lecteur de carte. Le circuit électronique I_{C} porté par le connecteur 1 comporte des moyens qui sont détaillés dans la demande PCT n°FR 96/00156 pour contrôler des opérations d'insertion ou de retrait de la carte C dans le lecteur de carte.

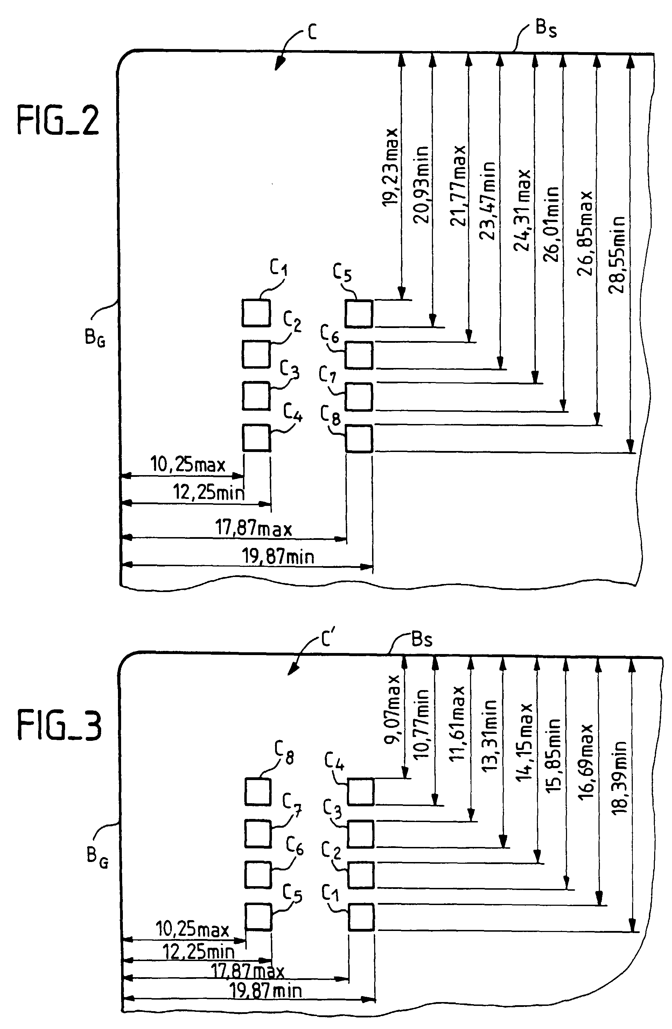

La figure 2 illustre un fragment de carte C conforme à la norme ISO 7816. Cette norme prescrit les dimensions, l'emplacement et l'affectation des plages de contacts, C₁ à C₈, affleurant à la surface des cartes à microcircuit de type ID-1. En réalité, la carte peut comprendre un ou plusieurs microcircuits. Les bornes d'entrées-sorties de ces microcircuits sont reliées à ces plages de contacts, C₁ à C₈.

Les plages de contacts, C₁ à C₈, sont organisées en deux rangées de quatre plages, respectivement C₁ à C₄ et C₅ à C₈, sensiblement parallèles entre elles et parallèles au bord gauche B_{G} (sur la figure) de la carte C, bord servant de butée. La figure représente également le bord supérieur B_{S} de la carte C. On a enfin porté, sur la figure 2, les principales caractéristiques géométriques définissant les contacts , C₁ à C₈, exprimées en distances minimales et maximales (en mm) telles qu'elles ressortent de la norme précitée.

Cette dernière ne définit ni la forme, ni la surface exactes de zone conductrice qui comprend chaque contact. Chaque zone conductrice doit comprendre une surface sensiblement rectangulaire de dimensions minimales 1,7×2mm. Les dimensions maximales ne sont pas précisées. Il est seulement indiqué que chaque contact doit être électriquement isolé des autres contacts. En outre, la surface de la carte C, entre plages de contact C₁ à C₈, peut être isolante ou conductrice : par exemple recouverte d'une métallisation reliée au contact de masse, dans un but de découplage.

Il y a huit contacts, comme indiqué précédemment. Ceux-ci peuvent être situés sur le recto ou le verso de la carte C, mais les distances précitées sont définies par rapport au bord gauche B_{G} et au bord supérieur B_{S} de la carte C.

L'affectation des contacts est donnée par le tableau disposé en annexe de la présente description.

La figure 3 illustre un exemple de carte à microcircuit C, conforme à la norme AFNOR, plus ancienne, dans les mêmes conditions de représentation que la carte C.

On constate des différences notables en ce qui concerne les distances entre les plages de contact, C₁ à C₈, et les bords gauche et supérieur précités. En outre, la localisation des plages de contacts est également différente. A titre d'exemple le contact C₈, dans le cas de la carte ISO, est à la place du contact C₁, dans le cas de la carte AFNOR.

Le connecteur utilisé dans le lecteur de carte doit tenir compte de la norme utilisée, cette contrainte étant commune aux connecteurs de l'Art Connu.

Par contre, pour que le connecteur selon l'invention fonctionne correctement, il est nécessaire aussi que les bords des plages des contacts "signaux" (c'est-à-dire autres que C₁ et C₅) soient alignés avec les plages de contacts C₁/C₅ ou décalés dans le sens favorable, ce qui est le cas le plus général.

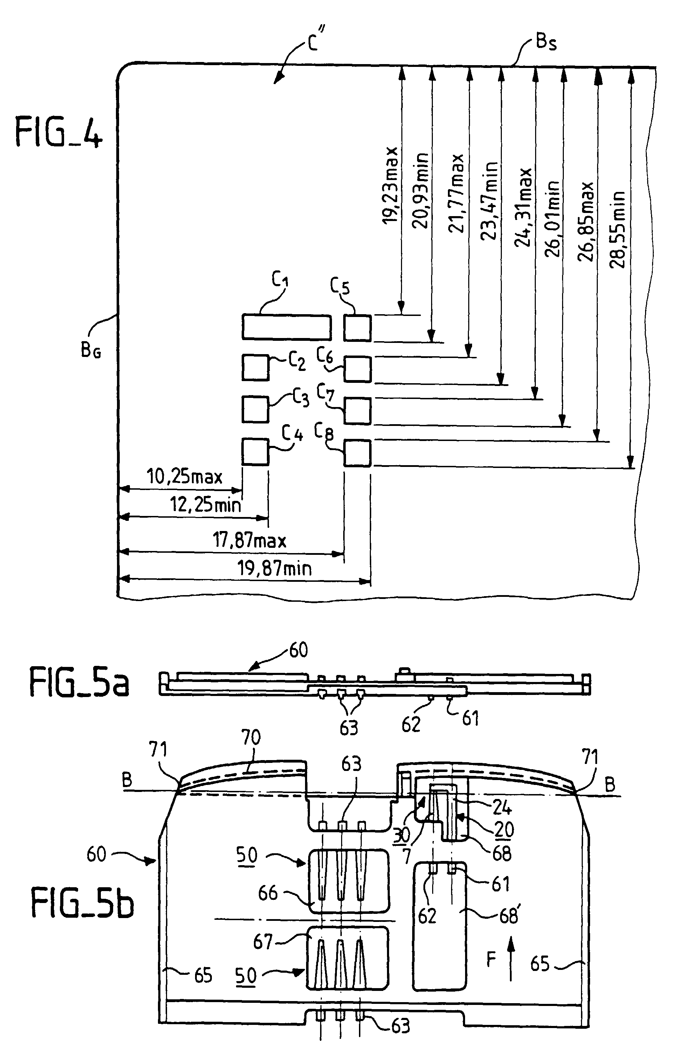

Cependant, il peut exister certaines configurations de cartes qui interdisent leur utilisation dans le cadre de l'invention. Un tel exemple est illustré par la figure 4 qui représente de nouveau une carte C conforme à la norme ISO précitée. Cependant, la plage de contact C₁ (tension d'alimentation) a une forme allongée et s'étend en direction de la plage C₅.

C'est la seule limitation dont souffre l'invention.

Pour fixer les idées, les figures Sa et 5b représentent, à titre d'exemple, un connecteur de l'Art Connu, désigné sous la référence générale 60, vu en coupe BB et de haut, respectivement. Les éléments de contact formant balais, représentés sous la référence générale 50 et repliés en 63, sont disposés en deux rangées dans des lumières 66 et 67, respectivement. Il comporte également une paire d'éléments de contacts 20-30, dits de détection de "fin de course", repliés en 60 et 61. Ces éléments 20 et 30 sont disposés dans une lumière 68 et leurs extrémités repliées dans une lumière 68'.

On remarque que pour une insertion d'une carte (non représentée) dans le sens de la flèche F, le rebord avant 70 (haut de la figure 5b), qui est incurvé, présente deux points extrêmes latéraux 71. Ces deux points 71 définissent une ligne de butée BB pour la carte. La région 24 de l'élément de contact 20, située près de la ligne de butée BB est dotée d'un profil en forme de crosse. Lorsque la carte est insérée complètement dans le connecteur 60, elle repousse l'élément de contact 20, ce qui entraîne une mise en contact des deux éléments de contact 20 et 30 et une détection d'insertion complète de la carte ("fin de course") par des circuits électroniques appropriés du lecteur (non représentés) associés au connecteur 60. Cette détection autorise l'alimentation effective en tension du balais associé à la plage C₁ de la carte C (voir figure 2, par exemple).

L'invention est susceptible de deux modes de réalisations principaux.

Selon un premier mode de réalisation, on ajoute un élément de contact supplémentaire du type "balais de tension", qui vient en parallèle avec le "balais de tension" normal, selon une configuration qui sera décrite ci-après. Ce balais supplémentaire est notamment décalé par rapport au balais normal.

Selon un second mode de réalisation, l'élément de contact de type "balais de tension" n'est pas doublé mais seulement décalé par rapport à la rangée d'éléments de contact à laquelle il appartient.

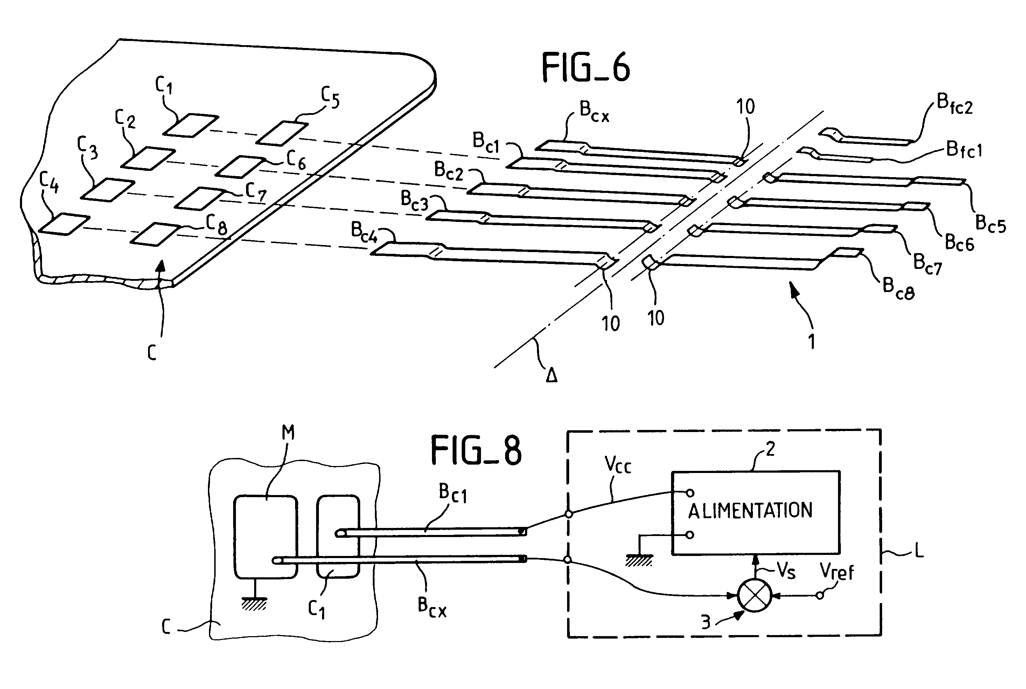

La figure 6 illustre schématiquement un connecteur 1 d'insertion de carte C selon le premier mode de réalisation de l'invention. On a supposé, dans l'exemple décrit sur cette figure 6, que la carte C à insérer dans le connecteur 1 répond à la norme ISO précitée.

Pour plus de clarté, on n'a représenté, sur la figure 6, que les éléments de contact et leurs dispositions dans l'espace. Les autres éléments : corps du connecteur et autres accessoires peuvent être entièrement communs aux connecteurs de l'Art Connu, par exemple au connecteur représenté sur les figures 5a et 5b.

De façon connue en soi, le connecteur 1 comprend deux rangées d'éléments de contact, formant balais, respectivement B_{C1}B_{C4} et B_{C5}-B_{C8}, quatre dans chaque rangée. Chacun de ces balais est destiné à être mis en contact galvanique avec une plage correspondante, C₁ à C₈, de la carte C. Ils jouent le rôle des éléments de contact 50 de la figure 5a.

De façon également connue en soi, il peut être prévu une paire d'éléments de contacts, B_{fc1} et B_{fc2}, dits de "fin de course", destinés à détecter l'insertion complète et correcte de la carte C dans le connecteur 1.

Comme le montre la figure 6, les balais, B_{C1}-B_{C4} et B_{C5}-B_{C8}, sont constitués de lames métalliques, minces et souples, dont les extrémités distales 10 à 80 ont la forme d'une crosse. Ces lames sont parallèles entre elles et les extrémités distales précitées sont disposées en vis à vis, deux par deux, de par et d'autre d'un axe de symétrie A perpendiculaire aux lames.

Selon une version de l'invention, on prévoit un élément de contact supplémentaire, référencé B_{CX}, doublant l'élément de contact B_{C1}, de type "balais de tension. Cet élément de contact supplémentaire B_{CX} peut d'ailleurs être découpé (au moment de la fabrication du connecteur) dans la même bande que les contacts normaux et surmoulé en même temps qu'eux dans le corps du connecteur (voir figure 5b). Il sera avantageux, dans ce cas, de rétrécir la largeur d'une lame et d'en ajouter une cinquième à côté.

Cet élément de contact supplémentaire B_{CX} permet de détecter l'insertion, comme le retrait de la carte C et, donc, de brancher ou de couper l'alimentation en énergie électrique, de la manière qui sera explicité ci-après.

Il peut également remplir la fonction de l'élément de contact "fin de course" ou y être ajouté afin d'en améliorer les performances.

Toujours pour le cas d'une carte C répondant à la norme ISO, la figure 7a illustre la position des éléments de contact balais B_{C1} et B_{CX}, par rapport à la plage C₁, en position de travail normal, c'est-à-dire carte C correctement introduite dans le connecteur 1. Dans ce cas, l'élément de contact balais B_{CX} est en avant de l'élément de contact balais B_{C1}, mais en dehors de la plage C₁.

Dans la configuration illustrée par la figure 7a, on a supposé que l'espace entre C₁ (voir figure 5) et C₅ était occupé par une plage métallique M au potentiel de la masse. La carte C est bloquée contre une butée b.

Dans cet état de travail normal, l'élément de contact balais B_{C1} est alimentée par le tension d'alimentation V_{CC}, soit généralement + 5 V. La plage C₁ est alors également portée à ce potentiel et le microcircuit de la carte C (non représenté) alimenté en énergie électrique. Les opérations de lecture et/ou lecture peuvent se dérouler normalement.

Si la carte est retirée, normalement ou "arrachée", la plage C₁ va subir une translation selon la flèche F_{R} et l'élément de contact balais B_{CX} va se rapprocher de celle-ci. Cette situation est illustrée par la figure 6b. Selon l'écart existant entre les plages C₁ et M, et/ou la vitesse de retrait de la carte C, un des deux événements suivants va se produire :
a/ l'élément de contact balais supplémentaire B_{CX} va engendrer un court-circuit avec la plage C₁ ;
b/ la tension "lue" par cet l'élément de contact balais supplémentaire B_{CX} va changer.

Dans les deux cas, on détecte une modification d'état qui peut être mise à profit pour couper l'alimentation électrique.

Par contre, les autres éléments de contacts, B_{C2} à B_{C8}, n'ont pas le temps de sortir de leurs plages respectives, C₂ à C₈.

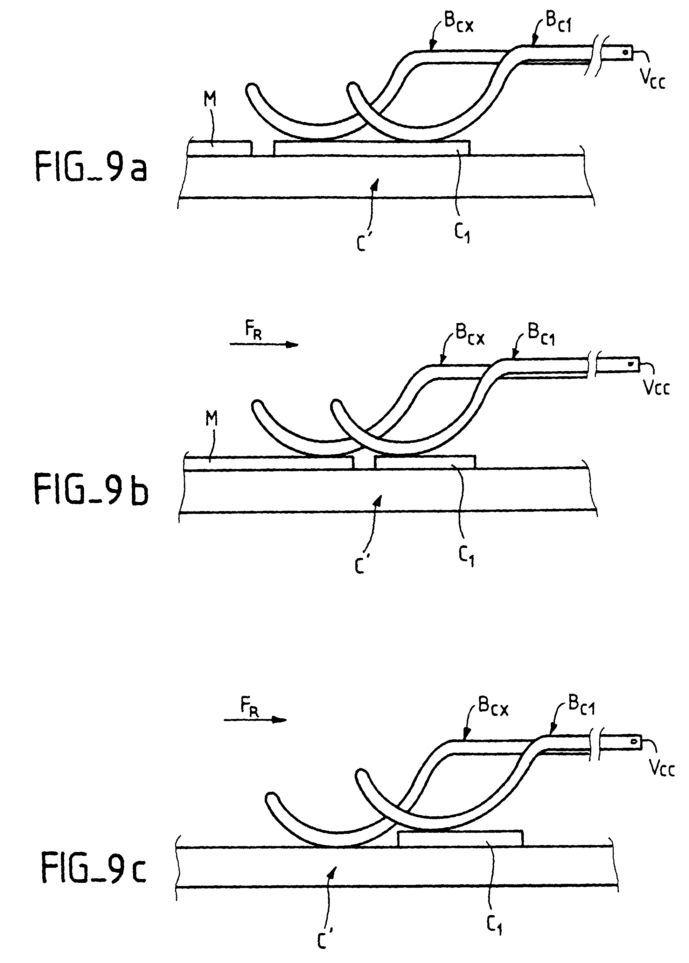

La figure 8 illustre schématiquement, sous la forme d'un bloc schéma, un circuit électronique de gestion d'état des éléments de contact B_{C1} et B_{CX}.

L'élément de contact B_{C1} est connecté à la sortie V_{CC} d'une alimentation électrique régulée 2 disposée dans le lecteur L. L'élément de contact supplémentaire B_{CX} est connecté à l'entrée d'un circuit 3, comprenant par exemple un comparateur de tension, entre V_{CC} et une tension de référence V_{ref}, par exemple 0 V, la plage M étant supposée être à la masse. En réalité toute tension de référence peut convenir, le rôle du circuit de comparaison 3 étant de détecter une variation du potentiel de l'élément de contact supplémentaire B_{CX}, d'amplitude supérieure à un seuil déterminé. Ce seuil tient compte, notamment, des tolérances de la tension d'alimentation, des parasites prévisibles, etc.

On suppose également que l'alimentation 2 est pourvue de circuits électroniques détectant une mise en court-circuit de la sortie (mise à la masse de la tension V_{CC}) et coupant celle-ci. Cette opération sera réalisée pour la détection de l'événement "a/" rappelé ci-dessus : détection d'un court-circuit.

La détection de l'événement "b/" (modification du potentiel de l'élément de contact balais supplémentaire B_{CX}) est réalisée par le circuit comparateur 3. Le signal de sortie V_{S} est transmis sur une entrée de l'alimentation 2 et bloque celle-ci (mise hors tension de l'élément de contact balais B_{C1}) lorsqu'un changement de potentiel d'amplitude prédéterminée est détecté.

Ce signal de sortie V_{S} peut aussi être transmis à un système électronique pour désactiver les balais signaux.

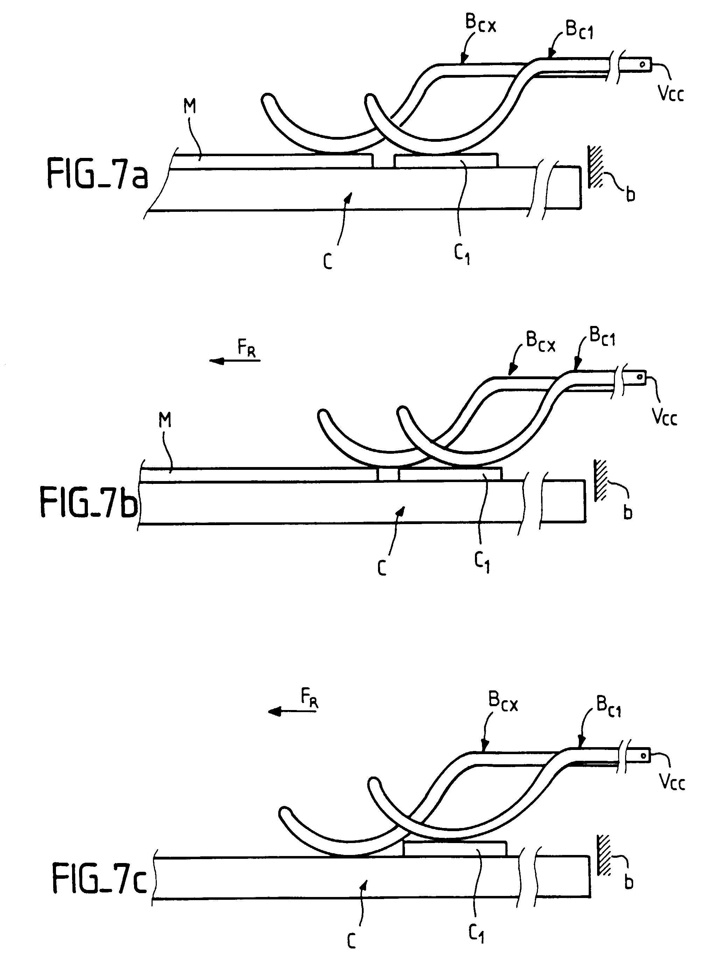

La figure 7c illustre également une situation de retrait de la carte Cₐᵣₜₑ, mais dans cet exemple, la plage de masse M (figures 7a et 7b) n'existe pas. Lorsque l'on va retirer la carte C du connecteur (flèche F_{R}), le potentiel de l'élément de contact supplémentaire C_{BX} va changer et ce changement va être détecté par le comparateur 3 (figure 8). L'élément de contact supplémentaire B_{CX} passe au potentiel V_{CC}.

La figure 9a illustre la configuration à adopter pour le cas d'une carte C à la norme AFNOR. La butée (non représentée) est du côté opposé à la plage C₁. Plus précisément, cette figure illustre l'état de travail normal. L'élément de contact supplémentaire C_{BX} est décalé en avant de l'élément de contact C_{B1}, mais repose sur la plage C₁. Les deux éléments de contact C_{BX} et C_{B1}, sont donc portés au même potentiel V_{CC}. On suppose également qu'une plage de masse, formée par la plage C₅, jouxte la plage C₁.

Lorsque l'on procède à un retrait de la carte C, par exemple par arrachement, la plage de masse C₅ va se rapprocher de l'élément de contact supplémentaire C_{BX}, comme illustré par la figure 9b.

Comme précédemment, deux événements distincts peuvent être détectés :
a/ situation de court-circuit entre la plage de masse C₅ et la plage de tension C₁, du fait que l'élément de contact supplémentaire B_{CX} repose sur les deux plages à la fois ;
b/ détection d'un changement du potentiel de l'élément de contact supplémentaire B_{CX}, qui passe de la valeur V_{CC} (par exemple + 5 V) à 0 V.

En réalité, dans ce dernier cas, une variation de tension, supérieure à un seuil donné, est suffisante. Il n'est donc pas nécessaire d'attendre la retombée à zéro.

Egalement, comme précédemment, les autres éléments de contacts, B_{C2} à B_{C8} n'ont pas eu le temps de quitter les plages, C₂ à C₈, respectivement.

La gestion de ces deux événements peut s'effectuer, comme précédemment, en faisant appel aux circuits électroniques de la figure 8.

Enfin, s'il n'y a pas de plage de masse proche de la plage C₁, comme illustré par la figure 9c, seul l'événement "b/" se produit et peut être détecté par les mêmes circuits (plus précisément par le comparateur 3).

Le mode de réalisation qui vient d'être décrit atteint parfaitement les buts que s'est fixés l'invention.

Cependant, comme il a été indiqué, deux états ou événements distincts doivent pouvoir être détectés, ce qui impose la présence dans le lecteur d'une électronique permettant la gestion de l'élément de contact supplémentaire B_{CX}.

Selon le second mode de réalisation de l'invention (non représenté), on se contente de décaler légèrement l'élément de contact du type "balais de tension", par rapport aux autres éléments de contact de la même rangée : "balais d'alimentation ". Dans ce cas, aucun élément de contact supplémentaire B_{CX} n'est nécessaire. La réalisation est donc plus simple.

Dans le cas d'une carte aux normes ISO, il suffit de décaler l'élément de contact du type "balais d'alimentation" B_{C1} vers le côté butée par rapport aux autres éléments de contact : "balais de signaux". Si la plage "alimentation" C₁ n'est pas plus longue, côté butée, que les plages "signaux", ce décalage est suffisant pour assurer un séquencement correcte.

Cependant la norme ISO précitée ne garantit pas que cette exigence soit remplie et, de fait de nombreuses, cartes bancaires ont une configuration de plage "alimentation" qui ne convient pas.

On réservera donc ce mode de réalisation à des applications spécifiques.

Dans le cas des cartes à la norme AFNOR, on décale l'élément de contact B_{C1} du côté butée par rapport aux éléments de contact du type "balais signaux". Si on se reporte de nouveau aux figures 9a à 9c, on dispose l'élément de contact B_{C1} en lieu et place de l'élément de contact supplémentaire B_{CX}.

Cette disposition assure un séquencement correct, par coupure de l'alimentation, éventuellement après mise en court-circuit de celle-ci.

Le principal avantage du second mode de réalisation est naturellement qu'il n'est pas nécessaire de prévoir une électronique de gestion de l'état des balais. En outre, seule une légère modification de l'élément de contact B_{C1} s'avère nécessaire.

Cependant, comme il a été rappelé, certaines cartes sont incompatibles du fait de la conformation des plages C₁, conformation que ne peuvent garantir les normes.

Naturellement, pour que l'invention puisse produire ses effets, il est nécessaire qu'un certain nombre d'exigences soient remplies. Elles tiennent essentiellement à un respect de tolérances sur la réalisation et le positionnement dans le connecteur de l'élément de contact B_{C1} par rapport à la plage C₁, lorsque la carte C est en butée et le décalage entre l'élément de contact normal B_{C1} et l'élément de contact supplémentaire B_{CX}, lorsque celui-ci existe (premier mode de réalisation).

Notamment, pour fixer les idées, le centre de la plage C₁ est à une distance égale à 18,87 mm de la butée carte b, avec une tolérance +0,4 mm maxi et-0,5 mm maxi. Comme il a été indiqué, la largeur de la plage C₁, selon une direction parallèle à F_{R}, est de 2 mm mini et la distance séparant une plage contiguë à C₁ et C₁ est de 0,2 mm.

Les précisions à obtenir lors de la fabrication doivent être en adéquation avec ces valeurs. Cette exigence concerne non seulement les éléments de contacts eux-mêmes et leurs positionnements relatifs, mais aussi d'autres opérations, telles que le surmoulage, etc.

Toutes ces opérations résultent cependant de choix technologiques à la portée de l'Homme de Métier.

A la lecture de la description qui précède, on constate aisément que l'invention présente de nombreux avantages et parmi lesquels les avantages indiqués ci-après.

En ce qui concerne la précision, dans le cas d'un connecteur selon l'Art Connu, muni d'éléments de contact du type "fin de course", la garantie d'un bon séquencement est tributaire :
- de la précision mécanique des éléments de contact précités ;
- de la position des plages de contacts par rapport au bord de la carte ;
- de la position des éléments de contacts balais par rapport aux éléments de contact de type "fin de course".

Dans le cas d'un connecteur selon l'invention, la précision dépend :
- du décalage voulu des éléments de contact balais, obtenu par un outil de découpe-cambrage des balais ;
- de la précision dans les dimensions et l'espacement des plages de contact de la carte obtenues par des procédés de découpe ou équivalent.

La précision globale obtenue est meilleure que celle obtenue avec l'aide des seuls éléments de contact de type "fin de course".

L'encombrement peut être moindre que celui des connecteurs équivalents de l'Art connu, car les éléments de contact de type "fin de course" peuvent être omis, ce qui permet une diminution éventuelle de l'épaisseur.

En sens contraire, si l'on maintient les éléments de contact de type "fin de course", les dispositions propres à l'invention permettent, par addition des effets, une augmentation de la fiabilité.

Enfin le coût peut être diminué si les éléments de contact de type "fin de course" sont omis, même dans le cas du premier mode de réalisation, car la lame supplémentaire n'induit qu'un coût d'outillage supplémentaire.

| **ANNEXE** | |
|---|---|
| Contact N° | Dénomination et affectation des contacts |
| C₁ | VCC (Tension d'alimentation) |
| C₂ | RST (Signal de remise à zéro) |
| C₃ | CLK (Signal d'horloge) |
| C₄ | Réservé pour un usage futur |
| C₅ | GND (Masse) |
| C₆ | VPP (Tension de programmation) |
| C₇ | I/O (Données entrées/sorties) |
| C₈ | Réservé pour un usage futur |

## Revendications

1. Système de lecture de carte à microcircuit comprenant un connecteur pour appareil lecteur de carte (C) à microcircuit comportant un corps supportant des éléments de contact balais (B) destinés à être mis en contact électrique avec des plages conductrices associées audit microcircuit monté dans la carte (C) lorsque celle-ci est insérée dans le connecteur (1), l'un desdits éléments de contact balais (Bc1), porté à un potentiel déterminé (Vcc) étant destiné à alimenter en énergie électrique ledit microcircuit via une desdites plages conductrices et un autre desdits éléments de contact balais étant porté au potentiel de masse et mis en contact avec au moins une desdites plages conductrices, au moins une partie des éléments de contact balais (B) étant reliée à un circuit électronique (Ic) comportant des moyens pour contrôler des opérations d'insertion ou de retrait de la carte (C) dans le lecteur, ledit circuit (Ic) étant relié, d'autre part, avec le circuit électronique (4) du lecteur de carte, ledit connecteur étant caractérisé en ce qu'il comprend et porte ledit circuit électronique (Ic) et en ce que l'un (Bcx) desdits éléments de contact balais porté à un second potentiel déterminé, est décalé par rapport aux autres éléments de contact balais (Bcl-Bc8) de manière à ce que, après insertion correcte de la carte (C) dans le connecteur (1), un des deux événements suivants se réalise lors d'un retrait de la carte du connecteur, avant que les autres éléments de contact balais (Bc2-Bc8) ne quittent les plages de contact (C2-C8) de la carte (C) avec lesquelles ils sont en contact:
- la mise en court-circuit dudit élément de balais (Bc1) porté au potentiel déterminé et dudit élément de balai porté au potentiel de masse,
- ou la variation déterminée dudit second potentiel, d'une amplitude atteignant un seuil déterminé.

2. Système selon la revendication 1, caractérisé en ce que ledit élément de contact balais (Bcx) décalé par rapport aux autres éléments de contact balais, est un élément de contact unique affecté à l'une (C₁) desdites plages de contact qui est décalé par rapport aux contacts balais affectés aux autres plages de contact.

3. Système selon la revendication 1, caractérisé en ce que ledit élément de contact balais décalé par rapport aux autres éléments de contact balais est un élément de contact supplémentaire (B_{CX}), adjacent audit élément de contact balais (B_{C1}) destiné à alimenter en énergie électrique ledit microcircuit, via ladite plage conductrice (C₁) dite d'alimentation, et doublant cet élément.

4. Système selon la revendication 3, caractérisé en ce que, ladite carte (C) ) microcircuit répondant à la norme ISO, ledit élément de contact balais supplémentaire (B_{CX}) est décalé par rapport audit élément de contact balais (B_{C1}) destiné à alimenter en énergie électrique ledit microcircuit d'une valeur telle qu'il repose à l'extérieur de la plage de contact (C₁) dite d'alimentation lorsque la carte (C) est insérée correctement dans le connecteur et qu'il s'en rapproche, lors d'un retrait de celle-ci, de manière à créer l'un desdits deux événements.

5. Système selon la revendication 4, caractérisé en ce que ladite variation de potentiel est détectée lorsque le potentiel dudit élément de contact supplémentaire (B_{CX}) atteint ledit premier potentiel déterminé (V_{CC}).

6. Système selon la revendication 4, caractérisé en ce que la surface de ladite carte (C) comportant des plages supplémentaires (M) disposées entre lesdites plages de contact et portées au potentiel dit de masse, ledit élément de contact balais supplémentaire (B_{CX}) repose sur l'une desdites plages (M), lorsque la carte (C) est insérée correctement dans le connecteur, de manière à être porté au potentiel dit de masse, et en ce que ledit événement de court-circuit est provoqué par la mise en contact électrique de cette plage supplémentaire (M) avec la plage de contact (C₁) dite d'alimentation, par l'élément de contact balais supplémentaire (B_{CX}), lors du retrait de la carte (C).

7. Système selon la revendication 3, caractérisé en ce que, ladite carte (C) à microcircuit répondant à la norme AFNOR, ledit élément de contact balais supplémentaire (B_{CX}) est décalé par rapport audit élément de contact balais (B_{C1}) destiné à alimenter en énergie électrique ledit microcircuit d'une valeur telle qu'il repose à l'intérieur de la plage de contact (C₁) dite d'alimentation lorsque la carte (C) est insérée correctement dans le connecteur et qu'il sorte de celle-ci lors d'un retrait du retrait de la carte (C) de manière à créer l'un desdits deux événements, et en ce que lesdits premier (V_{CC}) et second potentiels déterminés sont identiques.

8. Système selon la revendication 7, caractérisé en ce que ladite variation de potentiel est détectée lorsque le potentiel dudit élément de contact supplémentaire (B_{CX}) est inférieur au premier potentiel déterminé dudit seuil déterminé.

9. Système selon la revendication 7, caractérisé en ce que la surface de ladite carte (C) comportant des plages supplémentaires (M) disposées entre lesdites plages de contact et portées au potentiel dit de masse, ledit élément de contact balais supplémentaire (B_{CX}) est mis en mouvement vers l'une desdites plages (M), lors du retrait de la carte (C) et en ce que ledit événement de court-circuit est provoqué par la connexion de cette plage supplémentaire (M) et de la plage de contact (C₁) dite d'alimentation, par l'élément de contact balais supplémentaire (B_{CX}), lors du retrait de la carte (C).

10. Système selon l'une quelconque des revendications précédentes, caractérisé en ce qu'il comporte en outre une paire d'éléments de contacts (B_{FC1}-B_{FC2}) dits de "fin de course" destinés à détecter l'insertion complète de ladite carte (C).

## Patentansprüche

1. Lesesystem für Karten mit Mikroschaltung umfaßt eine Steckverbindung für Kartenlesegeräte (C) mit Mikroschaltung, das ein Gehäuse zum Stützen von Kontaktarmen (B) aufweist, wobei die Kontaktarme dazu bestimmt sind, in elektrischen Kontakt mit den leitenden Bereichen zu gelangen, die mit der in der Karte (C) montierten Mikroschaltung verbunden sind, wenn die Karte (C) in den Steckverbinder (1) eingeführt ist, wobei einer der Kontaktarme (Bc1), an dem ein bestimmtes Potential (V_{cc}) anliegt, dazu bestimmt ist, die Mikroschaltung über einen der leitenden Bereiche mit elektrischer Energie zu versorgen und ein anderer Kontaktarm mit dem Massepotential und mit mindestens einem der leitenden Bereiche in Kontakt steht, wobei mindestens ein Teil der Kontaktarme (B) mit einem elektronischen Schaltkreis (I_{c}) verbunden ist, der Mittel zum Kontrollieren der Einführ- oder Ausführvorgänge der Karte (C) aus bzw. in den Leser aufweist, wobei andererseits der Schaltkreis (I_{c}) mit dem elektronischen Schaltkreis (4) des Kartenlesers verbunden ist, wobei der Steckverbinder dadurch gekennzeichnet ist, daß er den elektronischen Schaltkreis (I_{c}) umfaßt und trägt, und daß einer (B_{cx}) der Kontaktarme, an dem ein zweites Potential anliegt, verglichen mit den anderen Kontaktarmen (B_{c1} bis B_{c8}) derart versetzt angeordnet ist, daß nach dem korrekten Einführen der Karte (C) in den Steckverbinder (1) beim Herausziehen der Karte des Steckverbinders und noch bevor die anderen Kontaktarme (B_{c2} bis B_{c8}) die Kontaktbereiche (C2 bis C8) der Karte (C), mit denen sie in Kontakt stehen, verlassen, eines der zwei folgenden Ereignisse stattfindet:
- das Kurzschließen des Kontaktarms (B_{c1}), an dem das bestimmte Potential anliegt, mit dem mit dem Massepotential angeschlossenen Kontaktarm,
- oder die Veränderung des bestimmten zweiten Potentials, wobei eine Amplitude eine bestimmte Schwelle erreicht.

2. System nach Anspruch 1, dadurch gekennzeichnet, daß der Kontaktarm (B_{cx}) verglichen mit den anderen Kontaktarmen versetzt angeordnet ist, und ein Kontaktelement ist, das einzig einem (C₁) der Kontaktbereiche zugeordnet ist, wobei dieser Kontaktbereich (C₁) verglichen mit den Kontaktarmen versetzt angeordnet ist, die den anderen Kontaktbereichen zugeordnet sind.

3. System nach Anspruch 1, dadurch gekennzeichnet, daß der verglichen mit den anderen Kontaktarmen versetzte Kontaktarm ein zusätzliches Kontaktelement (B_{cx}) ist, das dem Kontaktarm (B_{c1}) benachbart ist, wobei dieser dazu bestimmt ist, den Schaltkreis mit elektrischer Energie über den leitenden Bereich (C₁) der Quelle zu versorgen, und dieses Element zu verdoppeln.

4. System nach Anspruch 3, dadurch gekennzeichnet, daß die Mikroschaltkreiskarte (C) die ISO-Norm erfüllt, wobei der zusätzliche Kontaktarm (B_{cx}) verglichen mit dem Kontaktarm (B_{c1}) versetzt angeordnet ist, der dazu bestimmt ist, die Mikroschaltung mit elektrischer Energie mit einem Wert zu versorgen, wobei die Mikroschaltung auf dem Äußeren des Kontaktbereichs (C₁) der Quelle ruht, wenn die Karte (C) korrekt in den Steckverbinder eingeführt ist, und die Mikroschaltung sich beim Auszug dem Kontaktbereich (C₁) nähert, so daß eines der zwei Ereignisse stattfindet.

5. System nach Anspruch 4, dadurch gekennzeichnet, daß die Änderung des Potential detektiert wird, wenn das Potential des zusätzlichen Kontaktelementes (B_{cx}) das erste bestimmte Potential (V_{cc}) erreicht.

6. System nach Anspruch 4, dadurch gekennzeichnet, daß die Oberfläche der Karte (C) zusätzliche Bereiche (M) umfaßt, die zwischen den Kontaktbereichen angeordnet und an das Massepotential angeschlossen sind, wobei der zusätzliche Kontaktarm (B_{cx}) auf einem der Bereiche (M) ruht, wenn die Karte (C) korrekt in den Steckverbinder eingeführt wird, so daß dieser an das Massepotential angeschlossen ist und daß das Kurzschlußereignis durch elektrisches Kontaktieren dieses zusätzlichen Bereiches (M) mit dem Kontaktbereich (C₁) der Quelle durch den zusätzlichen Kontaktarm (B_{cx}) beim Auszug der Karte (C) hervorgerufen wird.

7. System nach Anspruch 3, dadurch gekennzeichnet, daß die Karte (C) mit Mikroschaltung die Norm AFNOR erfüllt, wobei der zusätzliche Kontaktarm (B_{cx}) verglichen mit dem Kontaktarm (B_{c1}) versetzt anceordnet ist, der dazu bestimmt ist, die Mikroschaltung mit elektrischer Energie derart mit einem Wert zu versorgen, daß der Kontaktarm (B_{c1}) im Inneren des Kontakzbereichs (C₁) der Quelle ruht, wenn die Karte (C) korrekt in den Steckverbinder eingeführt ist, und er diesen Kontaktbereich beim Auszug der Karte (C) verläßt, um eines der beiden Ereignisse zu erzeugen, und daß die ersten (V_{cc}) und die zweiten bestimmten Potentiale identisch sind.

8. System nach Anspruch 7, dadurch gekennzeichnet, daß die Änderung des Potentials detektiert wird, wenn das Potential des zusätzlichen Kontaktelements (B_{cx}) kleiner ist als das erste durch die Schwelle bestimmte Potential.

9. System nach Anspruch 7, dadurch gekennzeichnet, daß die Oberfläche der Karte (C) zusätzliche Bereiche (M) umfaßt, die zwischen den Kontaktbereichen angeordnet und an das Massepotential angeschlossen sind, wobei der zusätzliche Kontaktarm (B_{cx}) in Richtung eines der Bereiche (M) in Bewegung versetzt wird beim Auszug der Karte (C) und daß das Kurzschlußereignis durch die Verbindung des zusätzlichen Bereichs (M) mit dem Kontaktbereich (C₁) der Quelle und durch den zusätzlichen Kontaktarm (B_{cx}) beim Auszug der Karte (C) hervorgerufen wird.

10. System nach einem der vorhergehenden Ansprüche, dadurch gekennzeichnet, daß es ferner ein Paar "Anschlag" genannte Kontaktelemente (B_{FC1} bis B_{FC2}) umfaßt, die dazu bestimmt sind, das vollständige Einführen der Karte (C) zu detektieren.

## Claims

1. System for reading a microcircuit card or smart card, comprising a connector for an apparatus for reading a microcircuit card or smart card (C) having a body supporting brush contact elements (B) which are intended to be brought into electrical contact with conducting areas associated with the said microcircuit fitted into the card (C), when this card is inserted into the connector (1), one of the said brush contact elements (B_{C1}), at a defined potential (V_{CC}), being intended to supply electrical power to the said microcircuit via one of the said conducting areas and another of the said brush contact elements being at earth potential and brought into contact with at least one of the said conducting areas, at least one part of the brush contact elements (B) being connected to an electronic circuit (I_{C}) which includes means for controlling operations of inserting the card (C) into the reader and of removing it therefrom, the said circuit (I_{C}) being connected, moreover, to the electronic circuit (4) of the card reader, the said connector being characterized in that it comprises and carries the said electronic circuit (I_{C}), and in that one (B_{CX}) of the said brush contact elements, which is at a second defined potential, is offset with respect to the other brush contact elements (B_{C1} - B_{C8}) so that, after the card (C) has been correctly inserted into the connector (1), one of the following two events occurs upon removal of the card from the connector, before the other brush contact elements (B_{C2} - B_{C8}) leave the conducting areas (C₂ - C₈) on the card (C) with which they are in contact:
- the short-circuiting of the said brush element (B_{C1}) at the defined potential and of the said brush element at earth potential,
- or the defined variation of the said second potential, with an amplitude reaching a defined threshold.

2. System according to Claim 1, characterized in that the said brush contact element (B_{CX}) offset with respect to the other brush contact elements is a single contact element which is assigned to one (C₁) of the said contact areas and is offset with respect to the brush contacts assigned to the other contact areas.

3. System according to Claim 1, characterized in that the said brush contact element offset with respect to the other brush contact elements is an additional contact element (B_{CX}) which is adjacent to the said brush contact element (B_{C1}) intended to supply electrical power to the said microcircuit, via the said conducting area (C₁) called the supply pad, and which duplicates this element.

4. System according to Claim 3, characterized in that, the said microcircuit card or smart card (C) complying with the ISO standard, the said additional brush contact element (B_{CX}) is offset with respect to the said brush contact element (B_{C1}) intended to supply electrical power to the said microcircuit by an amount such that it rests outside the contact area (C₁) called the supply pad when the card (C) is correctly inserted into the connector and such that it approaches it, upon removal of the card, so that one of the two said events occurs.

5. System according to Claim 4, characterized in that the said variation in potential is detected when the potential of the said additional contact element (B_{CX}) reaches the said first defined potential (V_{CC}).

6. System according to Claim 4, characterized in that since the surface of the said card (C) has additional areas (M) that are arranged between the said contact areas and are at the so-called earth potential, the said additional brush contact element (B_{CX}) rests on one of the said areas (M), when the card (C) is correctly inserted into the connector, so as to be at the so-called earth potential, and in that the said short-circuiting event is caused by this additional area (M) coming into electrical contact with the contact area (C₁) called the supply pad, by means of the additional brush contact element (B_{CX}), upon removal of the card (C).

7. System according to Claim 3, characterized in that, the said microcircuit card or smart card (C) complying with the AFNOR standard, the said additional brush contact element (B_{CX}) is offset with respect to the said brush contact element (B_{C1}) intended to supply electrical power to the said microcircuit by an amount such that it rests within the contact area (C₁) called the supply pad when the card (C) is correctly inserted into the connector and such that it leaves this supply pad, upon removal of the card (C), so that one of the two said events occurs, and in that the said first defined potential (V_{CC}) and the said second defined potential are identical.

8. System according to Claim 7, characterized in that the said variation in potential is detected when the potential of the said additional contact element (B_{CX}) is less than the first defined potential by the said defined threshold.

9. System according to Claim 7, characterized in that, since the surface of the said card (C) has additional areas (M) that are arranged between the said contact areas and are at the so-called earth potential, the said additional brush contact element (B_{CX}) is moved towards one of the said areas (M), upon removal of the card (C), and in that the said short-circuiting event is caused by this additional area (M) being connected to the contact area (C₁) called the supply pad by the additional brush contact element (B_{CX}), upon removal of the card (C).

10. System according to any one of the preceding claims, characterized in that it furthermore includes a pair of so-called "end of travel" contact elements (B_{ET1} - B_{ET2}) which are intended to detect the complete insertion of the said card (C).
